# EUROPÄISCHE PATENTSCHRIFT

(11) **EP 3 240 966 B1**
(45) Veröffentlichungstag und Bekanntmachung des Hinweises auf die Patenterteilung: **19.09.2018**
(21) Anmeldenummer: 15816662.9
(22) Anmeldetag: 10.12.2015
(51) Int. Cl.: F16K 11/07, F16K 31/06

(54) **VENTILVORRICHTUNG**
VALVE DEVICE
DISPOSITIF SOUPAPE

(30) Priorität: 30.12.2014 DE 102014019615
(43) Veröffentlichungstag der Anmeldung: 08.11.2017
(73) Patentinhaber: Hydac Fluidtechnik GmbH, 66280 Sulzbach/Saar (DE)
(72) Erfinder: SCHULZ, Frank, 66440 Blieskastel-Bierbach (DE)
(74) Vertreter: Bartels und Partner, Patentanwälte
(86) Internationale Anmeldenummer: PCT/EP2015/002493
(87) Internationale Veröffentlichungsnummer: WO 2016/107669

(56) Entgegenhaltungen:
- WO-A1-2011/088974
- WO-A1-2011/088975
- DE-A1- 10 224 739

## Beschreibung

Die Erfindung betrifft eine Ventilvorrichtung mit den Merkmalen im Oberbegriff von Anspruch 1.

Eine Ventilvorrichtung ist durch die DE 10 2010 005 229 A1 bekannt. Bei der bekannten Lösung kann eine etwaige Störeinwirkung auf den Ventilkolben durch Reibungs- oder Strömungskräfte bedingt ohne Steuerungs- oder Regelungsaufwand durch einen verstärkten Abfluss von Druckmittel aus dem jeweiligen Vorsteuerraum ausgeglichen werden, wodurch der Hauptkolben sich weiter in Richtung der gewünschten Position verschiebt.

Wird der elektrische Strom für einen der beiden Elektromagnete gesenkt oder abgeschaltet, so bewegt sich der Vorsteuerkolben vorzugsweise zusätzlich durch einen Energiespeicher, regelmäßig in Form einer Druckfeder, in Richtung einer Sperrstellung der fluidführenden Verbindung zwischen dem angesteuerten Vorsteuerraum und dem zuordenbaren Tankanschluss. Der sich in dem dahingehenden Vorsteuerraum wieder aufbauende Druck schiebt den Hauptkolben dann erneut in Richtung seiner Ruheposition.

Der Hauptkolben lässt sich in derselben beschriebenen Weise auch bei Bestromung des Weiteren, zweiten Elektromagneten in die entgegengesetzte Richtung axial verschieben. Auf diese Weise lässt sich der zweite Verbraucheranschluss mit dem Druckanschluss verbinden und der erste Verbraucheranschluss mit dem Tankanschluss. Obwohl mit der bekannten Lösung eine Ventilvorrichtung geschaffen ist, die einen funktionssicheren Betrieb auch bei schwierigen Betriebsbedingungen erlaubt, lässt die bekannte Lösung noch Wünsche offen, was die Steigerung der Leistungsfähigkeit anbelangt bei gleichzeitiger Reduzierung der Ventil-Baugröße.

Die WO 2011/088975 A1 beschreibt eine gattungsgemäße Ventilvorrichtung mit einem Ventilgehäuse und mit einem in einer Kolbenbohrung des Ventilgehäuses axial verschiebbar angeordneten Hauptkolben über den ein erster Verbraucheranschluss und ein zweiter Verbraucheranschluss wechselweise mit einem Druckanschluss und mit einem Tankanschluss durch die Wirkung eines ersten Magnet-Betätigungssystems und eines zweiten Magnet-Betätigungssystems verbindbar sind, wobei der Hauptkolben aus einer zentrierten, vorzugsweise mittleren, Ruhestellung heraus zur Verbindung des ersten Verbraucheranschlusses mit dem Druckanschluss und des zweiten Verbraucheranschlusses mit dem Tankanschluss in eine erste Richtung und zur umgekehrten fluidführenden Verbindung der Anschlüsse in eine entgegengesetzte Richtung verschiebbar ist, wobei ein erster Vorsteuerraum vorgesehen ist, der eine erste Kolbenrückseite des Hauptkolbens mit einer Druckkraft beaufschlagt und ein zweiter Vorsteuerraum vorgesehen ist, der eine zweite Kolbenrückseite mit einer Druckkraft beaufschlagt, wobei der erste und der zweite Vorsteuerraum über eine fluidführende Verbindung mit dem Druckanschluss verbunden und ein erster Vorsteuerkolben sowie ein zweiter Vorsteuerkolben vorgesehen sind und wobei diese Vorsteuerkolben je eine fluidführende Verbindung zwischen den Vorsteuerräumen und dem Tankanschluss freigeben oder sperren, wobei in einem betätigten Zustand des jeweiligen Vorsteuerkolbens der Hauptkolben aufgrund des an ihm sich einstellenden Kräfteverhältnisses der Bewegung dieses Vorsteuerkolbens nachfolgt und dabei die fluidführende Verbindung zwischen dem Vorsteuerraum dieses Vorsteuerkolbens und dem zuordenbaren Tankanschluss derart ansteuert, dass Vorsteueröl fließt.

Ausgehend von diesem Stand der Technik liegt daher der Erfindung die Aufgabe zugrunde, die bekannte Lösung unter Beibehalten ihrer Vorteile, nämlich einen funktionssicheren Betrieb sicherzustellen, dahingehend weiter zu verbessern, dass eine Steigerung der Leistungsfähigkeit für die Ventilvorrichtung erreicht ist, bei gleichzeitiger Reduzierung ihrer Baugröße. Ferner soll eine kostengünstig herstellbare Ventilvorrichtung geschaffen werden.

Eine dahingehende Aufgabe löst eine Ventilvorrichtung mit den Merkmalen des Patentanspruchs 1 in seiner Gesamtheit.

Gemäß dem Kennzeichen von Anspruch 1 ist vorgesehen, dass der jeweilige Vorsteuerkolben als Hohlkolben ausgeführt ist, der in jeder seiner Verfahrstellungen eine permanent fluidführende Verbindung vom Druckanschluss zum Vorsteuerraum dieses Vorsteuerkolbens und auf die zuordenbare Kolbenrückseite des Hauptkolbens herstellt.

Dadurch, dass in einem betätigten Zustand des jeweiligen Vorsteuerkolbens der Hauptkolben aufgrund des an ihm sich einstellenden Kräfteverhältnisses der Bewegung dieses Vorsteuerkolbens nachfolgt und dabei die fluidführende Verbindung zwischen dem Vorsteuerraum dieses Vorsteuerkolbens und dem zuordenbaren Tankanschluss derart ansteuert, dass Vorsteueröl fließt, ist gegenüber der bekannten Lösung die Vorsteuerung mittels Einsatzes eines druckausgeglichenen Schiebers realisiert, wodurch die Ventilvorrichtung konstruktiv einfacher aufbaut und sich mithin kostengünstig herstellen lässt. Durch den angesprochenen Druckausgleich bedingt durch die sinnfällige Ansteuerung von Vorsteuerkolben und Hauptkolben wird die Auflösung betreffend den Fluidstrom verbessert, was mit einer Steigerung der Leistungsfähigkeit für die Ventilvorrichtung einhergeht, und aufgrund der Schieberkonstruktion lässt sich in platzsparender Weise die Fluidansteuerung erreichen, so dass die erfindungsgemäße Lösung sich von der Baugröße her bei gleichem Leistungsvermögen gegenüber bekannten Lösungen entsprechend reduzieren lässt. Das jeweils am Haupt(steuer)kolben sich ergebende Kräfteverhältnis ergibt sich aus der Druckdifferenz der jeweiligen an dem Hauptkolben angreifenden Federkräfte. Ferner erfolgt die Ansteuerung immer derart, dass die jeweilige insoweit realisierte Vorsteuerblende nicht zugefahren wird, so dass immer Vorsteueröl im Betrieb fließen kann.

Bei einer bevorzugten Ausführungsform der erfindungsgemäßen Ventilvorrichtung ist dabei die jeweilige fluidführende Verbindung zwischen dem Vorsteuerraum des jeweiligen Vorsteuerkolbens und dem zuordenbaren Tankanschluss durch mindestens eine Vorsteuerblende des Hauptkolbens gebildet, die in unbetätigtem Zustand von Vorsteuer- und Hauptkolben von dem zuordenbaren Vorsteuerkolben verschlossen ist. Auch der dahingehende Aufbau kommt einer platzsparenden Bauweise der erfindungsgemäßen Ventilvorrichtung weitestgehend entgegen.

Bei einer besonders bevorzugten Ausführungsform ist vorgesehen, dass zumindest einer der beiden Vorsteuerkolben mit seinem Außenumfang zumindest teilweise entlang des Innenumfanges einer zuordenbaren Ausnehmung im Ventilkolben geführt ist, in die die jeweilige Vorsteuerblende ausmündet. Der als Schieberkolben ausgebildete Vorsteuerkolben lässt sich dergestalt mit geringen Reibungs- und Bewegungskräften durch ein Betätigungs-Magnetsystem sinnfällig ansteuern. Dadurch dass bei einer weiter bevorzugten Ausführungsform der jeweilige Vorsteuerkolben außerhalb der Ausnehmung des Hauptkolbens einen vorstehenden Anlagebund aufweist, gegen den der Hauptkolben mit seiner jeweils zuordenbaren freien Stirnseite in mindestens einer seiner Verfahrstellungen anlegbar ist und dass in der Neutralstellung mittels mindestens einer Hauptfeder des Magnet-Betätigungssystems sowie mindestens einer Rückstellfeder, die den Vorsteuerkolben umfasst, der Hauptkolben in seiner unbetätigten Neutralstellung gehalten ist, ist in energetisch günstiger Weise mit geringen Betätigungskräften des jeweiligen Magnet-Betätigungssystems eine Ansteuerung von Vorsteuerkolben und Hauptkolben aus dieser Neutrallage heraus erreicht.

Weitere vorteilhafte Ausführungsformen der erfindungsgemäßen Ventilvorrichtung sind Gegenstand der Unteransprüche sowie der auf die Zeichnung bezogenen Beschreibung.

Im Folgenden wird die erfindungsgemäße Ventilvorrichtung anhand eines Ausführungsbeispiels nach der Zeichnung näher erläutert. Dabei zeigen in prinzipieller und nicht maßstäblicher Darstellung die
- Fig. 1: einen schematischen Längsschnitt durch die erfindungsgemäße Ventilvorrichtung, wobei die beiden endseitig angeordneten Magnet-Betätigungssysteme unbestromt sind;
- Fig. 2: in vergrößerter Darstellung einen rahmenförmigen Detailausschnitt der Ventilvorrichtung nach der Fig. 1; und
- Fig. 3: eine der Fig. 1 entsprechende Längsschnittdarstellung, bei der in Blickrichtung auf die Fig. 3 gesehen das links dargestellte Magnet-Betätigungssystem bestromt ist.

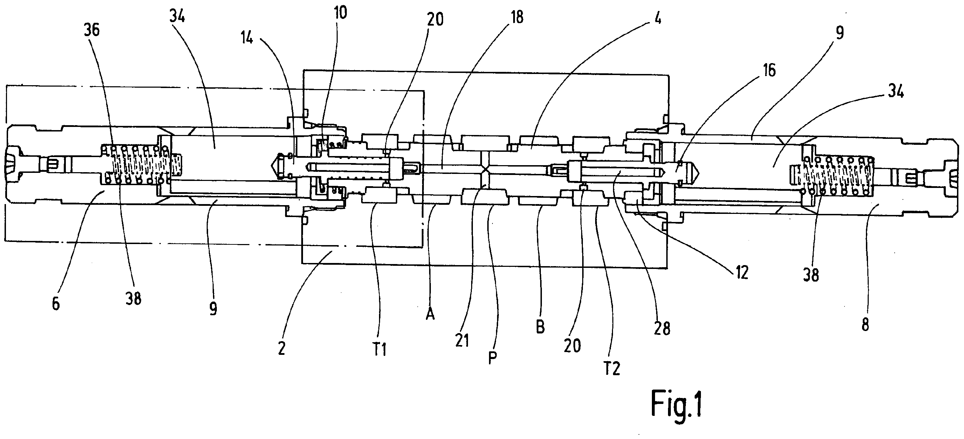

In der Fig. 1 ist in einem schematischen, nicht maßstäblichen Längsschnitt die erfindungsgemäße Ventilvorrichtung gezeigt zur Steuerung von Druckmittel, wie Hydrauliköl, zu einem nicht näher dargestellten Verbraucher, beispielsweise in Form eines Hydraulik-Arbeitszylinders, der mit seiner Kolben- und Stangenseite nebst den zugehörigen beiden Arbeitsräumen an die Verbraucheranschlüsse A, B anschließbar ist. Die Ventilvorrichtung weist ein Ventilgehäuse 2 auf, das im Wesentlichen blockartig und insbesondere zylindrisch ausgebildet ist. Ferner begrenzt das Ventilgehäuse 2 nach außen hin die Fluidanschlussstellen A, B, P, T1, T2, die innerhalb des Ventilgehäuses 2 in üblicher Weise in Ringkanäle ausmünden, die von einem Haupt- oder Ventilkolben 4 ansteuerbar sind. Die beiden Tankanschlüsse T1, T2 sind auf einen gemeinsamen Tankanschluss T zusammengeführt, so dass sowohl eine Fluidabfuhr aus dem Tankanschluss T1, als auch über den Anschluss T2 in den gemeinsamen Anschluss T erfolgt.

Hierfür ist in dem Ventilgehäuse 2 eine Durchgangsbohrung eingebracht, die als Kolbenbohrung oder Zylinderbohrung für die Aufnahme des Hauptkolbens 4 ausgebildet ist und dessen Längsverfahrbarkeit innerhalb des Ventilgehäuses 2 sicherstellt. Zur indirekten Betätigung des Hauptkolbens 4 sind zu beiden Seiten des Ventilgehäuses 2 ein erstes und ein zweites Magnet-Betätigungssystem 6, 8 angeordnet, die in üblicher Bauweise ausgebildet sind, wobei man der einfacheren Darstellung wegen die jeweiligen bestrombaren Betätigungsspulen für die Magnet-Betätigungssysteme 6, 8 weggelassen hat. Die dahingehenden Magnet-Betätigungssysteme 6, 8 lassen sich mit ihren Polrohranordnungen 9 an den freien Stirnseiten des Ventilgehäuses 2 gegenüberliegend in eingeschraubter Weise dort festlegen.

Das jeweilige Magnet-Betätigungssystem 6, 8 ist insbesondere in der Art eines sogenannten Proportionalmagneten ausgebildet, und der in Fig. 1 gezeigte Hauptkolben 4 weist außenumfangsseitig radiale Vorsprünge auf, wobei der jeweilige radiale Außenumfang des jeweiligen Vorsprunges derart gewählt ist, dass er dichtend an der Innenumfangsseite der Ventilkolbenbohrung abgleiten kann, um dergestalt auch die einzelnen Fluidanschlüsse voneinander separieren oder miteinander wahlweise verbinden zu können. Auf seinen beiden gegenüberliegenden Seiten schließt an das Ventilgehäuse 2 jeweils ein erster Vorsteuerraum 10 sowie ein zweiter Vorsteuerraum 12 an, deren jeweiliges Volumen, respektive Drucksituation, mittels eines Vorsteuerkolbens 14, 16 veränderbar ist. Die jeweiligen Vorsteuerräume 10, 12 sind fluidführend mit den Rück- oder freien Stirnseiten des Ventil- oder Hauptkolbens 4 fluidführend verbunden.

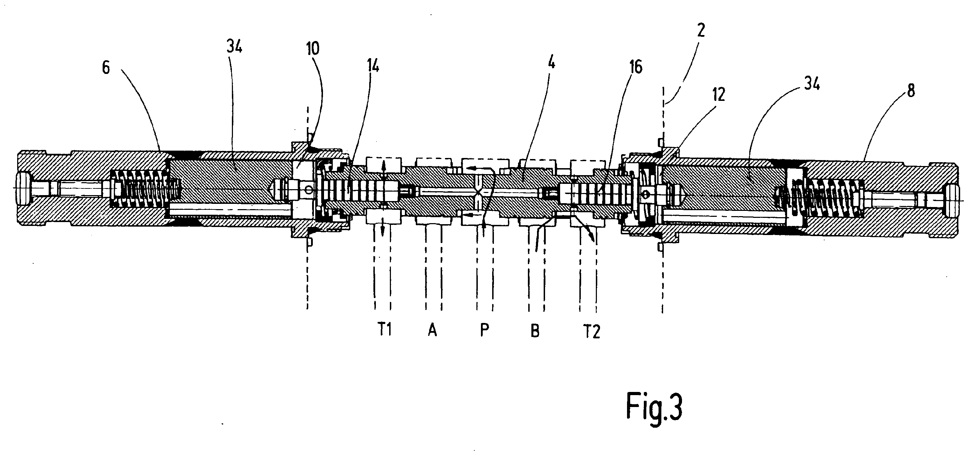

Ferner sind die beiden Vorsteuerräume 10, 12 mit dem Druckanschluss P über eine als Längsbohrung in dem Hauptkolben 4 gebildete, fluidführende Verbindung 18 mit dem Steuer- oder Pumpendruck einer nicht näher dargestellten Druckversorgungsquelle, beispielsweise in Form einer Hydropumpe, beaufschlagbar. Hierfür mündet der Längskanal 18 in einen Querkanal 21 aus, der beidseitig den Hauptkolben 4 durchgreift und in denjenigen Ringraum im Ventilgehäuse 2 ausmündet, der mit der Druckversorgungsquelle über die Druckversorgung P verbunden ist. In einem betätigten Zustand, wie dies beispielhaft in der Fig. 3 dargestellt ist und was noch näher erläutert werden wird, des jeweiligen Vorsteuerkolbens, hier des Vorsteuerkolbens 14, folgt der Hauptkolben 4 der Bewegung des Vorsteuerkolbens 14 nach, wobei die freigegebene, fluidführende Verbindung zwischen dem zugeordneten Vorsteuerraum 10 dieses Vorsteuerkolbens 14 und dem zuordenbaren Tankanschluss T1 für das Fließen des Vorsteueröls beibehalten wird.

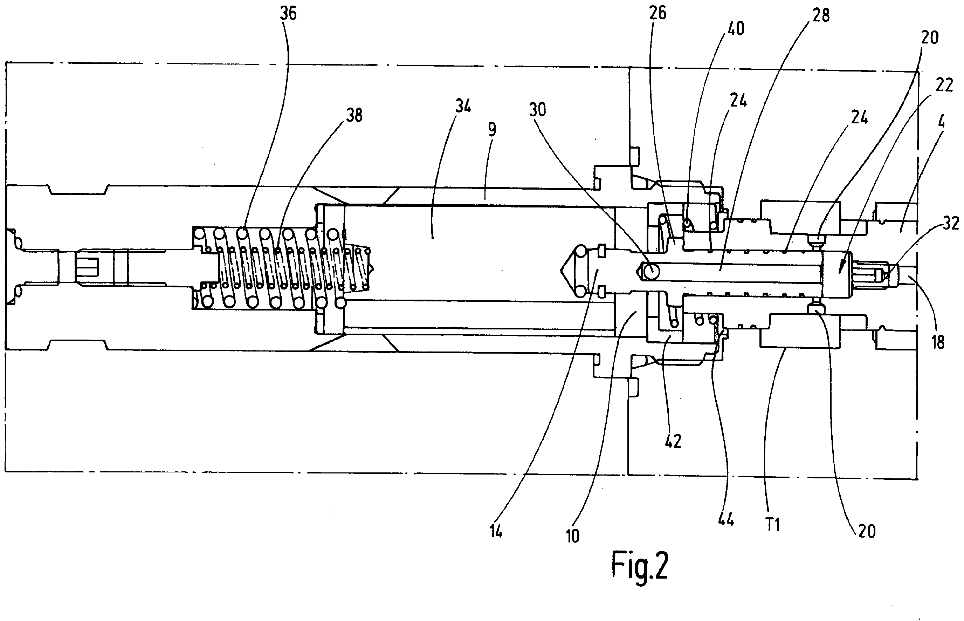

Insbesondere ist die jeweilige fluidführende Verbindung zwischen dem Vorsteuerraum, hier dem Vorsteuerraum 10, des jeweiligen Vorsteuerkolbens, hier des Vorsteuerkolbens 14, und dem zuordenbaren Tank- oder Rücklaufanschluss T1 durch mindestens eine Vorsteuerblende freigebbar, die bevorzugt in Form zweier Vorsteuerblenden 20 des Hauptkolbens 4 gebildet sind. Gemäß der Darstellung nach den Figuren 1 und 2 ist in unbetätigtem Zustand des Vorsteuerkolbens 14 und des Hauptkolbens 4 von dem zugeordneten Vorsteuerkolben 14 jedenfalls die Vorsteuerblende 20 verschlossen. Die vorstehend beschriebenen Verhältnisse gelten auch im unbetätigten Zustand des Systems für den zweiten Vorsteuerraum 12 nebst zweitem Vorsteuerkolben 16 sowie dem Bereich des Hauptkolbens 4 an der dahingehenden Stelle. Des Weiteren ist der jeweilige Vorsteuerkolben 14, 16 mit seinem Außenumfang zumindest teilweise entlang des Innenumfanges einer zuordenbaren Ausnehmung 22 (vgl. Fig. 2) im Hauptkolben 4 geführt, in die die jeweilige Vorsteuerblende 20 ausmündet. Für die dahingehende Längsführung des jeweiligen Vorsteuerkolbens 14, 16 in der angesprochenen Ausnehmung 20 im Hauptkolben 4 weisen die angesprochenen Kolben an ihrer Außenumfangsseite axial voneinander beabstandet einzelne Schmier- und Leckagenuten 24 auf, die entsprechend mit Hydraulikmedium befüllt den jeweiligen Vorsteuerraum 10, 12 gegenüber der fluidführenden Verbindung 18 in Form eines Längskanales im Hauptkolben 4 abdichten.

Wie sich des Weiteren aus den Figuren 1 und 2 ergibt, weist der jeweilige Vorsteuerkolben 14, 16 außerhalb der Ausnehmung 20 im Hauptkolben 4 einen vorstehenden Anlagebund 26 auf, gegen den der Hauptkolben 4 gemäß der Darstellung nach der Fig. 2 mit seiner jeweils zuordenbaren freien Stirnseite in einer seiner dahingehenden Verfahrstellungen anlegbar ist, wobei insbesondere eine Anlage in der Neutralstellung des Kolbens 4 für beide Anlagebünde 26 der Vorsteuerkolben 14, 16 vorliegt. Ferner ist der jeweilige Vorsteuerkolben 14, 16 als Hohlkolben ausgeführt, der in jeder seiner Verfahrstellungen eine permanent fluidführende Verbindung 28 vom Druckanschluss P zum Vorsteuerraum 10, 12 dieses Vorsteuerkolbens 14 oder 16 und insoweit auch auf die zuordenbare Kolbenrückseite des Hauptkolbens 4 herstellt. Die genannte Verbindung 28 ist wiederum in der Art eines Längskanales ausgebildet und mündet in Blickrichtung auf die Fig. 2 gesehen auf seiner rechten Seite in die Ausnehmung 22 aus und auf der linken Seite in einen Querkanalabschnitt 30, der beidseitig wiederum in den hier zuordenbaren Vorsteuerraum 10 für den ersten Vorsteuerkolben 14 ausmündet.

Des Weiteren ist in die permanent fluidführende Verbindung zwischen dem Druckanschluss P und dem Innenraum in Form der Ausnehmung 22 mit dem Hohlkolben als jeweiligem Vorsteuerkolben 14, 16 eine Blende 32 oder Drossel geschaltet (vgl. Fig. 2). Die angesprochene permanent fluidführende Verbindung geht demgemäß zunächst von der Druckversorgungsquelle über den Druckanschluss P im Ventilgehäuse 2 und dem zugeordneten Ringraumabschnitt in Richtung des Ventil- oder Hauptkolbens 4. Von dort aus ist die permanent fluidführende Verbindung über den Querkanal 21 sowie den jeweiligen Längskanal 18, die Blende 32, Teile des Innenraums, respektive der Ausnehmung 22 und der fluidführenden Verbindung 28 im jeweiligen Hohlkolben und in den Querkanalabschnitt 30 übergehend zu dem jeweiligen Vorsteuerraum 10, 12 hergestellt und mithin auf die jeweils zuordenbare Rückseite des Hauptkolbens 4 geführt. Gemäß der Darstellung nach der Fig. 1 gilt die dahingehende permanent fluidführende Verbindung gleichermaßen sowohl für den linken Vorsteuerraum 10 als auch für den rechten Vorsteuerraum 12.

Der jeweilige Vorsteuerkolben 14, 16 ist auf seiner dem Verbindungs- oder Längskanal 18 im Hauptkolben 4 abgewandten Seite in üblicher Weise über eine Sprengringverbindung oder dergleichen mit einem Magnetanker 34 des jeweiligen Magnetbetätigungssystems 6, 8 verbunden und lässt sich über den Magnetanker 34 entsprechend in der Ausnehmung 22 des Hauptkolbens geführt in Längsrichtung der Ventilanordnung bewegen. Der einfacheren Darstellung wegen wurden die elektrisch bestrombaren Spulenwicklungen des jeweiligen Magnet-Betätigungssystems 6, 8 weggelassen. Ein dahingehender Aufbau ist jedoch mehr als üblich, so dass an dieser Stelle hierauf nicht mehr näher eingegangen wird. Wird jedoch ein Magnet-Betätigungssystem 6 oder 8 bestromt, bewegt sich der jeweilige Magnetanker 34 in Blickrichtung auf die Fig. 1 gesehen jeweils nach links oder rechts (ziehender Magnet), wobei dann der jeweils andere Magnetanker 34 aufgrund der Federkraft einer weiter unten erläuterten Einstellfeder 38 mitfährt.

Der Magnetanker 34 ist, wie beispielhaft in der Fig. 1 und 2 dargestellt, durch die Wirkung der Einstellfeder 38, die den Magnetanker 34 nachschiebt, in einer Position gehalten, bei der der Hauptkolben 4 gegen die Anlageschulter 26 des jeweiligen Vorsteuerkolbens 14, 16 aufgrund der Wirkung der Einstellfeder 38 stößt. Eine Hauptfeder 36 ist in dieser Position nicht gespannt. Innerhalb der Hauptfeder 36 ist gleichfalls als Druckfeder konzipiert die Einstellfeder 38 aufgenommen, mit der sich der freie Verfahrweg des jeweiligen Magnetankers 34 mit einstellen lässt. Ferner ist als abschließender Energiespeicher auf jeder Seite der Ventilanordnung gleichermaßen eine Rückstellfeder 40 vorhanden, die sich mit ihrem einen freien Ende über einen Anlagetopf 42 an einer Schulter der gehäuseartigen Polrohranordnung 9 abstützt sowie mit ihrem anderen Ende an einem Anlageteller 44, der sich mit seiner freien vorstehenden Randumfassung an einem nach innen vorstehenden Ringbund des Ventilgehäuses 2 abstützt. Der Teller 44 selbst bildet eine Anlagefläche für eine vorkragende Ringschulter des Ventil- oder Hauptkolbens 4 in diesem Bereich aus, so dass beispielhaft gemäß der Darstellung nach der Fig. 2 bei einer Verfahrbewegung des Hauptkolbens 4 aus seiner dort gezeigten Neutralstellung nach links der Anlageteller 44 vom Ringbund des Ventilgehäuses 2 abhebt und mit zunehmender Druckkraft der Rückstellfeder 40, die entsprechend zusammengedrückt wird, dann nach links verfährt.

Es sei an dieser Stelle noch angemerkt, dass der jeweilige Magnetanker 34 über eine Durchgangsbohrung verfügt, so dass vor und hinter dem Magnetanker 34 ein Druckausgleich in den zuordenbaren Verfahrräumen innerhalb der jeweiligen Polrohranordnung geschaffen ist. Auch der dahingehende Aufbau ist insoweit üblich, so dass an dieser Stelle hierauf nicht mehr näher eingegangen wird. Ferner bleibt festzuhalten, dass insbesondere gemäß der Darstellung nach den Figuren 1 und 3 alle wesentlichen Komponenten der Ventilvorrichtungsanordnung als Gleichteilkonzept modular aufgebaut sind oder über gleiche Symmetrieachsen verfügen.

Im Folgenden soll nun die Funktionsweise der erfindungsgemäßen Ventilvorrichtung anhand der Zeichnung nach der Fig. 3 näher erläutert werden, wobei der einfacheren Darstellung wegen in der Fig. 3 das Ventilgehäuse 2 nur mit seinen strichliniert dargestellten Seitenaußenwänden teilweise dargestellt ist sowie mit seinen Fluidanschlüssen A, B, P, T1 und T2. Ansonsten gelten aber die bisher getroffenen Ausführungen auch im Hinblick auf die betätigte Ausführungsform nach der Fig. 3.

Vorgesteuerte Wegeventile, wie vorstehend beschrieben, besitzen gegenüber direkt-gesteuerten Ventilen den Vorteil, dass sie unabhängig von den Magnetkräften und Federkräften in Bezug auf die Betätigungskraft bzw. Rückstellkraft sind, d.h. eine Steigerung der Leistungsfähigkeit bei gleichzeitiger Reduzierung der Baugröße ist möglich, wenn nach diesem Prinzip vorgesteuert wird, was gleichbedeutend die Verringerung um eine Nenngröße ist. Es können mithin kleinere und kostengünstigere Magnete des Betätigungssystems mit geringerer Leistung eingesetzt werden, wodurch der Energieverbrauch reduziert bzw. optimiert ist. Im unbestromten Zustand gemäß den Darstellungen nach den Figuren 1 und 2 befindet sich das Wegeventil in der aufgezeigten Neutralstellung. Wird nun das Magnet-Betätigungssystem 6 bestromt, d.h. wird die nicht dargestellte Spulenwicklung der Betätigungsspule mit einem elektrischen Strom bzw. einer Spannung beaufschlagt, entsteht eine Magnetkraft am linken Magnetanker 34, die der Kraft der Hauptfeder 36 entgegenwirkt, wodurch sich der erste Vorsteuerkolben 14 zusammen mit dem Magnetanker 34 in Blickrichtung auf die Figuren gesehen nach links bewegt und dabei einen im Hauptkolben 4 angeordneten Öffnungsquerschnitt in Form der beiden Vorsteuerblenden 20 freigibt. Durch diesen Öffnungsquerschnitt fließt dann Vorsteueröl zum Tank über den Tank- oder Rücklaufanschluss T1, wodurch der Druck in der Vorsteuerkammer, sprich im ersten Vorsteuerraum 10, gesenkt wird, was den Hauptkolben 4 dem Vorsteuerkolben 14 folgen lässt, wobei die Vorsteuerblende 20 nicht zugefahren wird, so dass Vorsteueröl fließt.

Der Druck in der zweiten Vorsteuerkammer, respektive Vorsteuerraum 12 bleibt dann auf dem Versorgungsdruckniveau P, wodurch sich ein Kräfteungleichgewicht über die gegenüberliegenden Stirnflächen des Hauptkolbens 4 ergibt mit der Folge, dass eine resultierende Kraft in Richtung des Betätigungsmagnetsystems 6 entsteht. Indes gibt der Hauptkolben 4 die Verbindungen zwischen Druckversorgung P mit Verbraucheranschluss A und Verbraucheranschluss B mit Tank- oder Rücklaufanschluss T2 frei. In der Polrohranordnung 9 des weiteren Magnet-Betätigungssystems 8 wird der zugehörige zweite Vorsteuerkolben 16 durch die Einstellfeder 38 während der Bewegung des Hauptkolbens 4 nach links auf den zugehörigen Anschlag mittels des Anlagebundes 26 gedrückt, um ein Öffnen der zugehörigen Ablaufblenden 20 zu verhindern. Etwaige Störeinwirkungen auf den Hauptkolben 4 durch Reibungs- und Strömungskräfte werden ausgeglichen, indem mehr Vorsteueröl fließt, wodurch der Druck in der jeweiligen Vorsteuerkammer oder Vorsteuerraum 10, 12 sinkt und sich das Kräfteungleichgewicht vergrößert. Senkt man den elektrischen Strom, respektive die elektrische Spannung, kehrt der Hauptkolben 4 aus seiner in der Fig. 3 gezeigten ausgelenkten Stellung in seine Ausgangsstellung nach den Figuren 1 und 2 zurück.

Möchte man die Bewegungsrichtung umkehren, wird das Magnet-Betätigungssystem 8 bestromt, und es ergibt sich dann der gleiche Ablauf wie oben beschrieben, jedoch werden hierbei die Verbindungen des Druckanschlusses P mit dem Verbraucheranschluss B und der Verbraucheranschluss A mit dem Tank- oder Rücklaufanschluss T1 hergestellt. Der Vollständigkeit halber sei noch erwähnt, dass in der Fig. 3 für den ausgelenkten Zustand des Hauptkolbens 4 nach links mit Pfeilen die Fluidströmung von der Druckversorgung P zum Verbraucheranschluss A dargestellt sind sowie der zum Tankanschluss T2 führende Rücklauf aus dem Verbraucheranschluss B. Ferner ist am Tank- oder Rücklaufanschluss T1 die Fluidströmung über die Vorsteuerblenden 20 von Seiten der Druckversorgung P aufgezeigt, sofern der als Steuerschieber ausgebildete Hohlkolben des ersten Vorsteuerkolbens 14 die dahingehenden Blendenöffnungen 20 freigibt, die insoweit wieder zugesteuert werden können, sofern der Hauptkolben 4 mit seinen Vorsteuerblenden 20 in diesem Bereich auf die Außenumfangsseite des ersten Vorsteuerkolbens 14 bei einer Bewegung nach links "auffährt". Der Versorgungsdruck für die jeweilige Vorsteuerung kann entweder von einer Druckversorgungseinrichtung, beispielsweise in Form einer Hydropumpe, stammen oder vom jeweiligen Verbraucheranschluss A, B abgegriffen werden. Ferner kann über Wechselventile oder Rückschlagventile der jeweils höchste Druck der Vorsteuerung zur Verfügung gestellt werden. Wie dahingehend ergänzte Lösungen auszusehen haben, ist im Stand der Technik beispielsweise für ein vorgesteuertes Ventil nach der DE 10 2010 005 229 A1 in dieser Veröffentlichung gezeigt. Bei Stromunterbrechung an den Magnet-Betätigungssystemen 6, 8 kehrt der Hauptkolben 4 aufgrund der Federn 36, 38 wieder in seine federzentrierte Ausgangsstellung oder Mittelstellung nach den Figuren 1 und 2 zurück.

## Patentansprüche

1. Ventilvorrichtung mit einem Ventilgehäuse und mit einem in einer Kolbenbohrung des Ventilgehäuses (2) axial verschiebbar angeordneten Hauptkolben (4) über den ein erster Verbraucheranschluss (A) und ein zweiter Verbraucheranschluss (B) wechselweise mit einem Druckanschluss (P) und mit einem Tankanschluss (T1, T2) durch die Wirkung eines ersten Magnet-Betätigungssystems (6) und eines zweiten Magnet-Betätigungssystems (8) verbindbar sind, wobei der Hauptkolben (4) aus einer zentrierten, vorzugsweise mittleren, Ruhestellung heraus zur Verbindung des ersten Verbraucheranschlusses (A) mit dem Druckanschluss (P) und des zweiten Verbraucheranschlusses (B) mit dem Tankanschluss (T2) in eine erste Richtung und zur umgekehrten fluidführenden Verbindung der Anschlüsse (A, B, P, T1, T2) in eine entgegengesetzte Richtung verschiebbar ist, wobei ein erster Vorsteuerraum (10) vorgesehen ist, der eine erste Kolbenrückseite des Hauptkolbens (4) mit einer Druckkraft beaufschlagt und ein zweiter Vorsteuerraum (12) vorgesehen ist, der eine zweite Kolbenrückseite mit einer Druckkraft beaufschlagt, wobei der erste (10) und der zweite (12) Vorsteuerraum über eine fluidführende Verbindung mit dem Druckanschluss (P) verbunden und ein erster Vorsteuerkolben (14) sowie ein zweiter Vorsteuerkolben (16) vorgesehen sind und wobei diese Vorsteuerkolben (14, 16) je eine fluidführende Verbindung zwischen den Vorsteuerräumen (10, 12) und dem Tankanschluss (T1, T2) freigeben oder sperren, wobei in einem betätigten Zustand des jeweiligen Vorsteuerkolbens (14, 16) der Hauptkolben (4) aufgrund des an ihm sich einstellenden Kräfteverhältnisses der Bewegung dieses Vorsteuerkolbens (14, 16) nachfolgt und dabei die fluidführende Verbindung zwischen dem Vorsteuerraum (10, 12) dieses Vorsteuerkolbens (14, 16) und dem zuordenbaren Tankanschluss (T1, T2) derart ansteuert, dass Vorsteueröl fließt, **dadurch gekennzeichnet, dass** der jeweilige Vorsteuerkolben (14, 16) als Hohlkolben ausgeführt ist, der in jeder seiner Verfahrstellungen eine permanent fluidführende Verbindung (28) vom Druckanschluss (P) zum Vorsteuerraum (10, 12) dieses Vorsteuerkolbens (14, 16) und auf die zuordenbare Kolbenrückseite des Hauptkolbens (4) herstellt.

2. Ventilvorrichtung nach Anspruch 1, **dadurch gekennzeichnet, dass** die jeweilige fluidführende Verbindung zwischen dem Vorsteuerraum (10, 12) des jeweiligen Vorsteuerkolbens (14, 16) und dem zuordenbaren Tankanschluss (T1, T2) durch mindestens eine Vorsteuerblende (20) des Hauptkolbens (4) gebildet ist, die im unbetätigten Zustand von Vorsteuer- und Hauptkolben von dem zuordenbaren Vorsteuerkolben verschlossen ist.

3. Ventilvorrichtung nach Anspruch 2, **dadurch gekennzeichnet, dass** zumindest einer der beiden Vorsteuerkolben (14, 16) mit seinem Außenumfang zumindest teilweise entlang des Innenumfanges einer zuordenbaren Ausnehmung (22) im Hauptkolben (4) geführt ist, in die die jeweilige Vorsteuerblende (20) ausmündet.

4. Ventilvorrichtung nach Anspruch 3, **dadurch gekennzeichnet, dass** der jeweilige Vorsteuerkolben (14, 16) außerhalb der Ausnehmung (22) des Hauptkolbens (4) einen vorstehenden Anlagebund (26) aufweist, gegen den der Hauptkolben (4) mit seiner jeweils zuordenbaren freien Stirnseite in mindestens einer seiner Verfahrstellungen anlegbar ist.

5. Ventilvorrichtung nach einem der vorstehenden Ansprüche, **dadurch gekennzeichnet, dass** in die permanent fluidführende Verbindung zwischen Druckanschluss (P) und einem Innenraum mit dem Hohlkolben als Vorsteuerkolben eine Blende (32) oder Drossel geschaltet ist.

6. Ventilvorrichtung nach Anspruch 5, **dadurch gekennzeichnet, dass** der jeweilige Vorsteuerkolben (14, 16) mittels eines Magnetankers (34) des Magnet-Betätigungssystems (6, 8) betätigbar und innerhalb des Innenraums des Hauptkolbens (4) in der Art eines Schieberkolbens verfahrbar geführt ist.

7. Ventilvorrichtung nach einem der vorstehenden Ansprüche, **dadurch gekennzeichnet, dass** durch mindestens eine Hauptfeder (36) des Magnet-Betätigungssystems (6, 8) sowie mindes-tens eine Rückstellfeder (40), die den Vorsteuerkolben (14, 16) um-fasst, der Hauptkolben (4) in seiner unbetätigten Neutralstellung gehalten ist.

8. Ventilvorrichtung nach einem der vorstehenden Ansprüche, **dadurch gekennzeichnet, dass** mittels einer zusätzlichen Einstellfeder (38) die Ansteuerkraft des Magnet-Betätigungssystems (6, 8) auf den Magnetanker (34) mit vorgebbar ist.

9. Ventilvorrichtung nach einem der vorstehenden Ansprüche, **dadurch gekennzeichnet, dass** das Magnet-Betätigungssystem (6, 8) sowie die zuordenbare Vorsteuerstufe (10, 12) mit Vorsteuerkolben (14, 16) als Gleichteile ausgebildet auf beiden gegenüberliegenden Seiten des Hauptkolbens (4) mit entgegengesetzter Wirkung angeordnet sind.

## Claims

1. Valve device with a valve housing and with a main piston (4) arranged axially displaceably in a piston bore of the valve housing (2) by means of which a first load connection (A) and a second load connection (B) can be connected alternately to to a first pressure port (P) and a tank port (T1, T2) by the action of a first magnetic actuating system (6) and a second magnetic actuating system (8), wherein the main piston (4) can be displaced out from a centred, preferably mean, neutral position for connection of the first load port (A) to the pressure port (P) and the second load port (B) to the tank port (T2) in a first direction and for reversed fluid-carrying connection of the ports (A, B, P, T1, T2) in an opposite direction, wherein a first pilot chamber (10) is provided, which acts on a first rear side of the main piston (4) with a pressure force, and a second pilot chamber (12) is provided, which acts on a second piston rear side with a pressure force, wherein the first (10) and the second (12) pilot chamber are connected by means of a fluid-carrying connection to the pressure port (P), and a first pilot piston (14) and a second pilot piston (16) are provided and wherein these pilot pistons (14, 16) open or close a fluid-carrying connection between the pilot chambers (10, 12) and the tank port (T1, T2) wherein, in an actuated state of the respective pilot piston (14, 16), the main piston (4) follows due the balance of forces on it from the movement of this pilot piston (14, 16) and thus the fluid-carrying connection between the pilot chamber (10, 12) of this pilot piston (14, 16) and the associated tank port (T1, T2), so that pilot oil flows, **characterised in that** the respective pilot piston (14, 16) is designed as a hollow piston which, in each of its travel positions, males a permanent, fluid-carrying connection (28) from the pressure port (P) to the pilot chamber (10, 12) of this pilot piston (14, 16) and to the associated rear side of the main piston (4).

2. Valve device in accordance with claim 1, **characterised in that** the respective fluid-carring connection between the pilot chamber (10, 12) of the respective pilot piston (14, 16) and the associated tank port (T1, T2) is formed by at least one aperture (20) of the main piston (4), which is closed in the unactivated state of pilot and main piston by the associated pilot piston.

3. Valve device in accordance with claim 2, **characterised in that** at least one of the two pilot pistons (14, 16) is guided with its outer periphery at least partly along the inner periphery of an associated aperture (22) in the main piston (4), into which the respective pilot aperture opens (20).

4. Valve device in accordance with claim 3, **characterised in that** the respective pilot piston (14, 16) has a projecting bearing collar (26) outside the aperture (22) of the main piston (4), against which the main piston (4) can be positioned with its respective associated free end face in at least one of its travel positions.

5. Valve device in accordance with one of the preceding claims, **characterised in that** an orifice plate (32) or restrictor is located in the permanent fluid-carrying connection between pressure port (P) and an inner chamber with the hollow piston as pilot piston.

6. Valve device in accordance with claim 5, **characterised in that** the respective pilot piston (14, 16) can be actuated by means of a magnet armature (34) of the magnetic actuating system (6, 8) and can be movably guided within the interior of the main piston (4) as a type of sliding piston.

7. Valve device in accordance with one of the preceding claims, **characterised in that**, by means of at least one main spring (36) of the magnetic actuating system (6, 8) as well as at least one return spring (40), which comprises the pilot piston (14, 16), the main piston (4) is held in its unactuated neutral positionstellung gehalten ist.

8. Valve device in accordance with one of the preceding claims, **characterised in that**, by means of an additional adjusting spring (38), the control force of the magnetic actuating system (6, 8) can be preset on the magnet armature (34).

9. Valve device in accordance with one of the preceding claims, **characterised in that** the magnetic actuating system (6, 8) and the associated pilot stage (10, 12) with pilot piston (14, 16) are designed as commom parts on two opposing sides of the main piston (4), with opposing action.

## Revendications

1. Dispositif de soupape, comprenant un corps de soupape et un piston (4) principal, qui est monté coulissant axialement dans un alésage pour piston du corps (2) et par lequel un premier raccord (A) d'utilisateur et un deuxième raccord (B) d'utilisateur peuvent, en alternance, être mis en communication avec un raccord (P) de pression et avec un raccord (T1, T2) de réservoir, sous l'effet d'un premier système (6) d'actionnement à aimant et d'un deuxième système (8) d'actionnement à aimant, le piston (4) principal pouvant, à partir d'une position de repos centrée, de préférence médiane, pour la mise en communication du premier raccord (A) d'utilisateur avec le raccord (P) de pression et du deuxième raccord (B) d'utilisateur avec le raccord (T2) de réservoir, être déplacé dans un premier sens et, pour la mise en communication fluidique inverse des raccords (A, B, P, T1, T2), être déplacé en sens contraire, dans lequel il est prévu un premier espace (10) pilote, qui soumet à une force de pression une première face arrière du piston (4) principal et il est prévu un deuxième espace (12) pilote, qui soumet à une force de pression une deuxième face arrière de piston, le premier (10) et le deuxième (12) espace pilote communiquant par une communication fluidique avec le raccord (P) de pression et il est prévu un premier piston (14) pilote ainsi qu'un deuxième piston (16) pilote et dans lequel ces pistons (14, 16) pilotes dégagent ou obturent une communication fluidique entre les espaces (10, 12) pilotes et le raccord (T1, T2) de réservoir, dans lequel, dans un état actionné du piston (14, 16) pilote respectif, le piston (4) principal, en raison du rapport de force s'y établissant, suit le déplacement de ce piston (14, 16) pilote et ainsi commande la communication fluidique entre l'espace (10, 12) pilote de ce piston (14, 16) pilote et le raccord (T1, T2) de réservoir pouvant être associé, de manière à ce que de l'huile pilote s'écoule, **caractérisé en ce que** le piston (14, 16) pilote respectif est réalisé sous la forme d'un piston creux, qui, dans chacune de ses positions de déplacement, ménage une communication (28) fluidique permanente du raccord (P) de pression à l'espace (10, 12) pilote de ce piston (14, 16) pilote et à la face arrière pouvant être associée du piston (4) principal.

2. Dispositif de soupape suivant la revendication 1, **caractérisé en ce que** la liaison fluidique respective, entre l'espace (10, 12) pilote du piston (14, 16) pilote respectif et le raccord (T1, T2) de réservoir pouvant être associé, est formée par au moins un diaphragme (20) pilote du piston (4) principal, qui, à l'état non actionné des pistons pilote et principal, est fermé par le piston pilote pouvant être associé.

3. Dispositif de soupape suivant la revendication 2, **caractérisé en ce qu'**au moins l'un des deux pistons (14, 16) pilotes est, par son pourtour extérieur, guidé, au moins en partie, le long du pourtour intérieur d'un évidement (22) pouvant être associé du piston (4) principal, dans lequel débouche le diaphragme (20) pilote respectif.

4. Dispositif de soupape suivant la revendication 3, **caractérisé en ce que** le piston (14, 16) pilote respectif a, à l'extérieur de l'évidement (22) du piston (4) principal, un épaulement (26) de contact en saillie, sur lequel le piston (4) principal s'applique par sa face frontale libre respective pouvant être associée dans au moins l'une de ses positions de déplacement.

5. Dispositif de soupape suivant l'une des revendications précédentes, **caractérisé en ce qu'**un diaphragme (32) ou un étranglement est monté dans la communication fluidique permanente entre le raccord (P) de pression et un espace intérieur avec le piston creux comme piston pilote.

6. Dispositif de soupape suivant la revendication 5, **caractérisé en ce que** le piston (14, 16) pilote respectif peut être actionné au moyen d'une armature (34) d'aimant du système (6, 8) d'actionnement à aimant et est guidé, avec possibilité de se déplacer à la manière d'un piston coulissant, à l'intérieur de l'espace intérieur du piston (4) principal.

7. Dispositif de soupape suivant l'une des revendication précédentes, **caractérisé en ce que**, par au moins un ressort (36) principal du système (6, 8) d'actionnement à aimant, ainsi que par au moins un ressort (40) de rappel, qui entoure le piston (14, 16) pilote, le piston (4) principal est maintenu dans sa position neutre, non actionnée.

8. Dispositif de soupape suivant l'une des revendications précédentes, **caractérisé en ce qu'**au moyen d'un ressort (38) supplémentaire de réglage, la force de commande du système (6, 8) d'actionnement à aimant peut être prescrite sur l'armature (34) d'aimant.

9. Dispositif de soupape suivant l'une des revendications précédentes, **caractérisé en ce que** le système (6, 8) d'actionnement à aimant, ainsi que les espaces (10, 12) pilotes, pouvant être associés, avec des pistons (14, 16) pilotes sont, constitués sous la forme de parties identiques, disposés en ayant un effet contraire sur les deux faces opposées du piston (4) principal.
